**Europäisches Patentamt**

**European Patent Office**

**Office européen des brevets**

(11) Veröffentlichungsnummer: **0 108 717 B1**

(12) ## EUROPÄISCHE PATENTSCHRIFT

(45) Veröffentlichungstag der Patentschrift:
**08.10.86**

(51) Int. Cl.⁴: **E 03 F 5/14,** B 01 D 33/04

(21) Anmeldenummer: **83810485.9**

(22) Anmeldetag: **21.10.83**

(54) Vorrichtung zur Reinigung von Abwasser.

(30) Priorität: **05.11.82 CH 6438/82**

(43) Veröffentlichungstag der Anmeldung:
**16.05.84 Patentblatt 84/20**

(45) Bekanntmachung des Hinweises auf die Patenterteilung:
**08.10.86 Patentblatt 86/41**

(84) Benannte Vertragsstaaten:
**AT BE CH DE FR GB IT LI LU NL SE**

(56) Entgegenhaltungen:
**DE - A - 801 626
DE - B - 1 250 409
FR - A - 1 090 784
FR - A - 1 352 960
FR - A - 1 554 213
FR - A - 2 285 935**

(73) Patentinhaber: **Fuchs Maschinenbau,
Oberebenestrasse 1, CH-5620 Bremgarten (CH)**

(72) Erfinder: **Fuchs, Heinrich, Oberebenestrasse 1,
CH-5620 Bremgarten (CH)**
Erfinder: **Fuchs, Jürg, Kapuzinerhügel 11,
CH-5620 Bremgarten (CH)**

(74) Vertreter: **Frauenknecht, Alois J. et al, c/o PPS
Polyvalent Patent Service AG Fohrhölzlistrasse 19,
CH-5443 Niederrohrdorf (CH)**

## Beschreibung

Die vorliegende Erfindung bezieht sich auf eine Vorrichtung zur Reinigung von Abwasser mit wenigstens einem ein endloses Band enthaltenden Rechen in einem Einlaufkanal.

Die meisten Einlaufkanäle in Kläranlagen weisen ein relativ geringes Gefälle auf. Oft sind sie aus konstruktiven Gründen so flach gestaltet, dass sich der Sand gerade noch nicht ablagert. Bei den herkömmlichen Rechenanlagen werden Stäbe verwendet, die in bestimmten Abständen voneinander parallel verlaufen. Es werden jedoch Feinrechen verlangt, um im Faulturm sich nicht zersetzende Gegenstände, wie Wattestäbchen, Watte, Staniol, Zahnstocher, Rasierklingen usw. herauszurechen. Rechen mit kleinen Durchlassöffnungen sind jedoch wenig geeignet, da sie einen Stau des Abwassers und dadurch eine unerwünschte Ablagerung des Sandes vor der Rechenanlage verursachen.

Eine Vorrichtung der eingangs genannten Art ist in der FR-A-1 554 213 enthalten. Bei diesem als ein Sieb ausgebildeten Rechen fliesst das Wasser in das Innere des Bandes, so dass die eventuelle Ablagerung des Sandes nicht ausreichend respektiert ist. In der DE-B-1 250 409 ist eine Abdichtungsanordnung für ein kontinuierlich umlaufendes Filterband beschrieben und dargestellt, wobei jedoch nur die Befestigung des endlosen Bandes beschrieben wird und nicht seine Lagerung in einem Einlaufkanal in bezug auf das Abwasser. Auch bei dieser Druckschrift muss man also mit Ablagerungen und mit eventuellen Verstopfungen rechnen.

Der Erfindung liegt die Aufgabe zugrunde, die Nachteile des Bekannten zu beseitigen und eine Vorrichtung der eingangs genannten Art zu schaffen, die als Feinrechen funktionieren kann, wobei sie keinen wesentlichen Wasserstau verursacht und somit auch die Ablagerung des Sandes vor der Rechenanlage wesentlich vermindert.

Die vorgenannte Aufgabe wird erfindungsgemäss dadurch gelöst, dass der ein endloses Kunststoffband enthaltende Rechen mit seinem flachen Teil in den Einlaufkanal als eine Verlängerung des Bodens des Einlaufkanals in Richtung der Strömung des Abwassers und mit seinem ansteigenden Teil schräg aufwärts in Richtung der Strömung des Abwassers hinter dem flachen Teil aus dem Einlaufkanal sich erstreckend eingesetzt ist. Der Vorteil der Erfindung ist darin zu sehen, dass das Wasser durch den flachen Teil des Rechens nach unten fliessen kann, wobei die Länge dieses flachen Teiles und die Anzahl und Grösse der Öffnungen in dem Rechen der Durchflussmenge angepasst ist. Der ansteigende Teil des Rechens dient dann zum Entfernen von grösseren Teilen des Rechenguts.

Besonders vorteilhaft ist es, wenn das endlose Kunststoffband mit Schlitzen versehen ist. Diese Ausführungsform hat mehrere Vorteile. Der Durchmesser der unteren Rolle kann wesentlich kleiner gehalten werden als bei Verwendung von Metallbändern oder Metallgeflechten, was bauseitig wiederum wesentliche Vorteile bringt. Das Kunststoffband ist mit Schlitzen versehen, die einen ausreichenden Durchfluss ermöglichen.

Es ist zweckmässig, wenn das Kunststoffband mit Mitnehmern ausgerüstet ist. Die Mitnehmer ermöglichen es, die grösseren Teile, wie z. B. Steine und Äste, aufwärts zu transportieren.

Nach einer Weiterbildung besteht das Kunststoffband aus Segmenten, deren Endpartien nach aussen gebogen und aneinandermontiert sind und die Mitnehmer für grobe Teile bilden. Somit werden die Mitnehmer auf eine einfache Weise direkt als Bestandteile der einzelnen Segmente hergestellt. Auch diese Mitnehmer können Schlitze aufweisen.

Es ist vorteilhaft, wenn die obere Rolle, um die das Kunststoffband gelagert ist, Nocken aufweist, deren Form und gegenseitige Lage der Form und der gegenseitigen Lage der Schlitze des Kunststoffbandes entsprechen. Die Nocken der oberen Rolle greifen während des Betriebes des Rechens in die Schlitze des Kunststoffbandes ein und drücken so den darin haftenden Schmutz und eventuell das Eis aus dem Kunststoffband heraus. Durch diese Ausführungsform wird auch eine Tauglichkeit des Rechens bei tiefen Temperaturen gewährleistet.

Besonders vorteilhaft ist es, wenn die obere, mit den Nocken versehene Rolle, an die oberen Kettenräder angeschlossen sind, deren Ketten mit den Rändern des Kunststoffbandes verbunden sind, an einen Getriebemotor angekoppelt ist. Die obere, mit den Nocken versehene Rolle wird also gemeinsam mit den oberen Kettenrädern angetrieben, wobei dieser obere Teil mit dem Getriebemotor leicht zugänglich ist.

Es empfiehlt sich, den Rechen mit wenigstens einem Abstreifer zu versehen, der das Kunststoffband während des Umlaufes des Kunststoffbandes kontaktiert. Das Kunststoffband ist glatt, so dass die meisten Verunreinigungen auf der hinteren Seite automatisch abfallen. Die Schlitze werden mittels der Nocken gereinigt. Es können jedoch, insbesondere bei Eis, einige Teile auf dem Kunststoffband haften. In diesem Fall werden die haftenden Teile mit dem Abstreifer entfernt.

Nach einer Weiterbildung kontaktiert der Abstreifer während des Umlaufes des Kunststoffbandes auch die Mitnehmer. Der Vorteil ist darin zu sehen, dass auch von den Mitnehmern die haftenden Teile beseitigt werden.

Die Erfindung wird im folgenden anhand schematischer Zeichnungen näher erläutert. Es zeigt:

Fig. 1 eine beispielsweise erfindungsgemässe Gesamtanordnung des Rechens, wesentlich vereinfacht gezeichnet;

Fig. 2 eine Ansicht auf den ansteigenden und den flachen Teil des Rechens;

Fig. 3 einen vereinfachten Schnitt durch den flachen Teil des Rechens, und

Fig. 4 einen Schnitt durch die obere Rolle mit einem Teil des Kunststoffbandes und mit schematisch dargestellten zwei Lagen des Abstreifers.

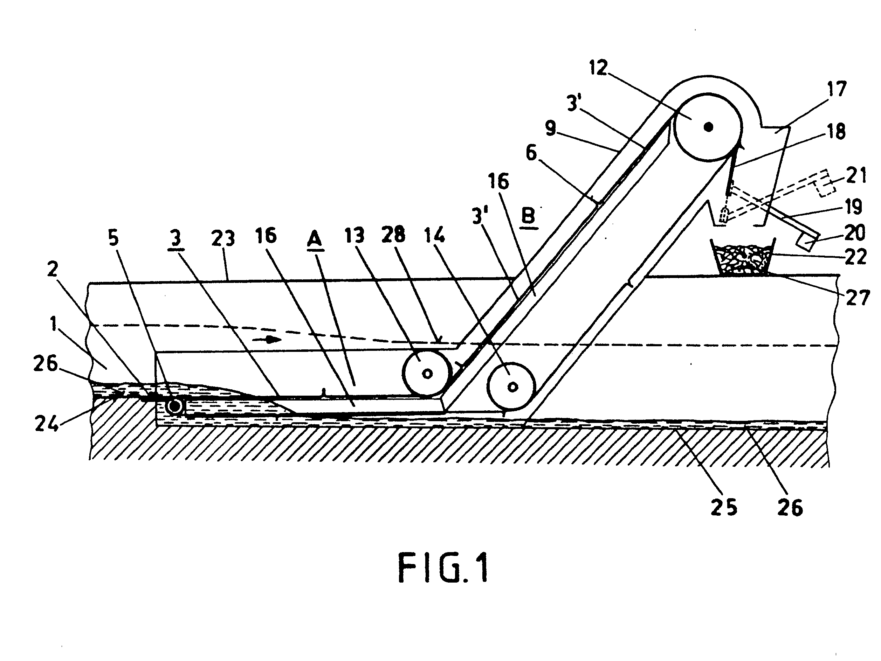

Gemäss Fig. 1 ist in einem Einlaufkanal 1 ein Rechen A, B gelagert. Der Boden des Einlaufkanals 1 ist mit der Bezugsziffer 24 bezeichnet. In der Strömungsrichtung des Wassers folgt ein tieferer Teil 25 des Bodens des Einlaufkanals 1. In diesem tieferen Teil 25 des Bodens des Einlaufkanals 1 ist ein flacher Teil A des Rechners angeordnet, so dass seine obere Oberfläche sich als eine Verlängerung des Bodens 24 des Einlaufkanals 1 erstreckt. Die kleine Entfernung zwischen dem vordersten Teil des Rechens und dem Boden 24 des Einlaufkanals 1 ist mit einer Gummiklappe 2 überbrückt. Ein Kunststoffband 3 ist mit Schlitzen versehen, die in dieser Zeichnung nicht sichtbar sind. Das Kunststoffband 3 besteht aus Segmenten 3'. Die Verbindungsteile dieser Segmente 3' bilden Mitnehmer 6. Das Kunststoffband 3 ist um eine untere Rolle 5 und um eine obere Rolle 12 geführt. Die untere Rolle 5 weist einen sehr kleinen Durchmesser auf. Die obere Rolle 12 wird später ausführlich beschrieben. Beide Rollen 5 und 12 sind zwischen zwei Seitenplatten 9 drehbar gelagert. Zwischen dem flachen Teil A und dem ansteigenden Teil B des Rechens ist ein erstes Umlenkkettenrad 13 und ein zweites Umlenkkettenrad 14 angeordnet. Zwischen dem oberen Teil des Kunststoffbandes 3 und seinem unteren Teil ist ein wasserdurchlässiger, dachförmiger Schutzteil 16 angeordnet. In diesem Beispiel erstreckt sich dieser dachförmige Schutzteil 16 sowohl in dem flachen Teil A als auch in dem ansteigenden Teil B des Rechens. Mit den Seitenplatten 9 ist in ihrem oberen Teil ein Trichter 17 verbunden, unter welchem ein Korb 22 angeordnet ist. Dieser Korb 22 steht auf dem oberen Rand 23 des Einlaufkanals 1. Innerhalb des Trichters 17 befindet sich ein Abstreifer 18. Dieser Abstreifer 18 ist auf einem zweiarmigen Hebel 19 befestigt, wobei das andere Ende des Hebels 19 ein Gegengewicht 20 trägt. In der Fig. 1 ist dieser Abstreifer 18 nur vereinfacht dargestellt. Voll ist die Lage des Abstreifers 18 gezeichnet, in der er zuerst einen Mitnehmer 6 berührt. Gestrichelt ist die unterste Lage des Abstreifers 18 gezeichnet, wo der Abstreifer 18 schon das äussere Ende des Mitnehmers 6 erreicht hat. Diese Lage ist mit der Bezugsziffer 21 bezeichnet. Das Wasser 26, eventuell mit Sand, ist nur schematisch gezeigt. Aus der Fig. 1 sieht man, dass das Wasser 26 zuerst oberhalb des Bodens 24 und dann über die Gummiklappe 2 auf die Oberfläche des Kunststoffbandes 3 fliesst. Es fliesst dann durch die Schlitze im Kunststoffband 3 und über den dachförmigen Schutzteil 16 seitlich in den tieferen Teil 25 des Bodens des Einlaufkanals 1, wo der Sand weiter durch das fliessende Wasser in der Strömungsrichtung transportiert wird. Ein Teil des Wassers fliesst direkt durch den dachförmigen Schutzteil 16. Die Wasseroberfläche 28 bei hohem Wasserstand ist in dieser Zeichnung nur schematisch als eine gestrichelte Linie gezeigt.

Gleiche Teile sind in allen Zeichnungen mit denselben Bezeichnungen versehen.

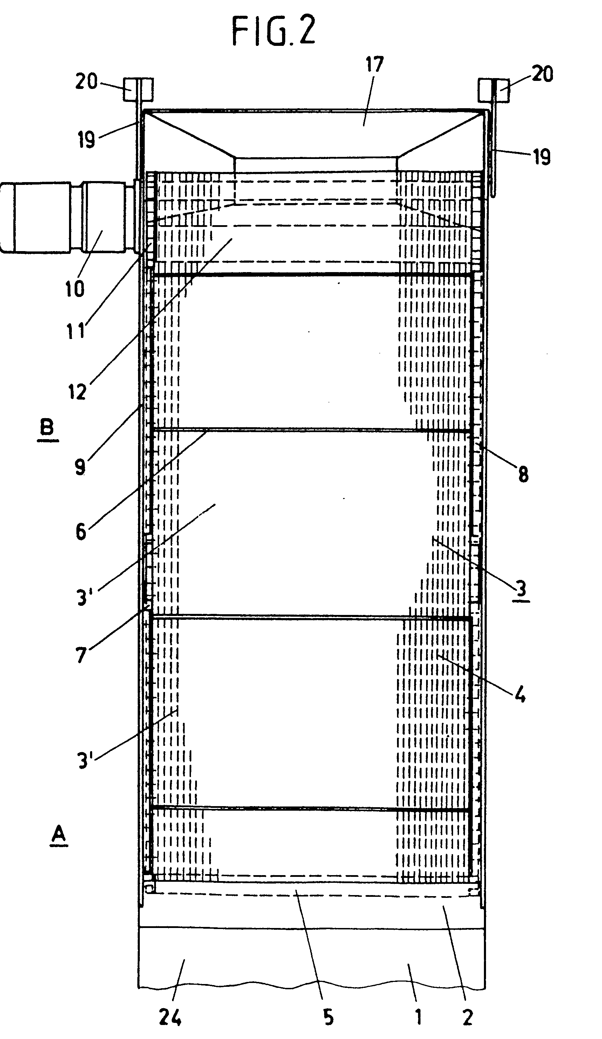

Die Fig. 2 zeigt den oberen Teil B des Rechens. Die meisten Bestandteile wurden schon anhand der Fig. 1 beschrieben. In der Fig. 2 sieht man zusätzlich die Schlitze 4, die jedoch in dieser Zeichnung nur als Striche vereinfacht gezeichnet werden und selbstverständlich in der ganzen Fläche des Kunststoffbandes 3 ausgeführt sind. Die aus Kunststoff bestehenden Gleitführungen 8 sind an den Seitenplatten 9 befestigt, und in ihnen sind die Ketten 7 geführt, die das Kunststoffband 3 tragen. Die obere Rolle 12 ist beidseitig mit Kettenrädern 11 versehen und an den Getriebemotor 10 angekoppelt. Im unteren Teil der Fig. 1 ist schematisch auch der flache Teil A des Rechens gezeigt. Die untere Rolle 5 ist teilweise mit der Gummiklappe 2 überdeckt, die den Anschluss auf den Boden 24 des Einlaufkanals 1 bildet.

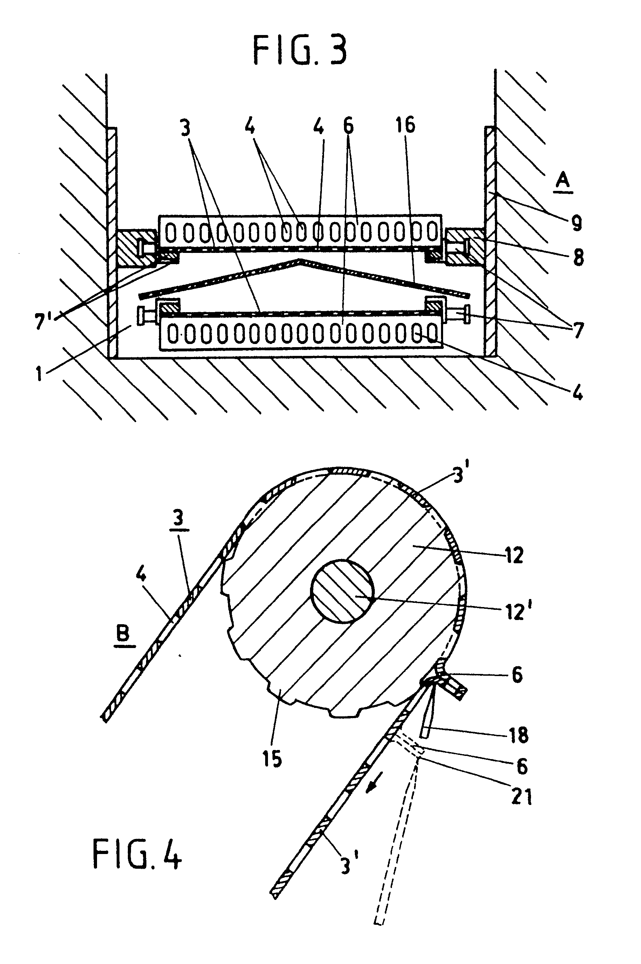

Fig. 3 zeigt einen vereinfachten Schnitt durch den flachen Teil A des Rechens und des Einlaufkanals 1. Die Seitenplatten 9 sind direkt an den Seitenwänden des Einlaufkanals 1 gelagert. Sie tragen die Gleitführungen 8 für die Ketten 7. Diese Gleitführungen 8 bestehen aus Kunststoff und dienen auch als Dichtungen zwischen dem Kunststoffband 3 und den Seitenplatten 9. Für die untere Seite des Kunststoffbandes 3 sind keine Gleitführungen 8 angebracht, damit das Wasser 26 eventuell mit dem Sand ohne Hindernis seitlich abfliessen kann. Das Kunststoffband 3 ist auf seinen beiden Rändern mittels Verbindungsteile 7' mit den Ketten 7 verbunden. In der Fig. 3 sind auch gut die Schlitze 4 sichtbar. In dem Kunststoffband 3 sehen wir diese Schlitze 4 im Schnitt, in den Mitnehmern 6 in Ansicht. Zwischen dem oberen und dem unteren Teil des Kunststoffbandes 3 ist ein dachförmiger Schutzteil 16 angeordnet. Dieser Schutzteil 16 ist zwar wasserdurchlässig, seine Öffnungen sind jedoch wesentlich kleiner als die Öffnungen der Schlitze 4. Wie aus der Fig. 3 ersichtlich ist, können die eventuell durch die Schlitze 4 durchgefallenen, grösseren Teilchen bzw. Sand seitlich in die freien Randpartien des Einlaufkanals 1 einfallen, von wo sie weiter infolge der Strömung des Wassers transportiert werden.

Die Fig. 4 zeigt im Schnitt die obere Rolle 12 mit einem Teil des Kunststoffbandes 3. Die obere Rolle 12 ist auf einer Welle 12' aufgesetzt, wobei diese Welle 12' an den Getriebemotor 10 angekoppelt ist, der auch die Kettenräder 11 antreibt. Die Oberfläche der oberen Rolle 12 ist mit Nocken 15 versehen, die als Zähne ausgebildet sind und deren Abmessungen und gegenseitige Lage den Abmessungen und der gegenseitigen Lage der Schlitze 4 des Kunststoffbandes 3 entprechen. Bei dem Betrieb des Rerchens dringen diese Nocken 15 in die Schlitze 4 ein und verdrängen den darin eventuell haftenden Schmutz und/oder Eis. Um auch die restlichen Verunreinigungen der Oberfläche des Kunststoffbandes 3 beseitigen zu können, ist ein Abstreifer 18 vorgesehen, der die Oberfläche des Kunststoffbandes 3 und die Funktionsfläche der Mitnehmer 6 abstreift. In der Fig. 4 ist voll die Lage des Abstreifers 18 gezeichnet, in welcher er zum erstenmal einen Abstreifer 6 berührt. Bei der weiteren Bewegung des Kunststoffbandes 3 nach unten bewegt sich der Abstreifer 18 bis zu dem äusseren Ende des Mitnehmers 6. Diese Lage ist gestrichelt gezeichnet und mit der Bezugsziffer 21 versehen. Der Abstreifer 18 ist aus einem elastischen Material hergestellt. Er kann kippbar angeordnet sein und mit einem Gegengewicht 20 versehen, wie es in der Fig. 1 gezeigt wurde. Er kann auch anders ausgeführt werden, z.B. kann er in einer federnden Lagerung gehalten werden. Wenn das zweckmässig ist, können auch mehrere Abstreifer 18 hintereinander angeordnet werden.

Es ist selbstverständlich, dass der Erfindungsgegenstand auf das in den Zeichnungen Dargestellte nicht beschränkt ist. So kann man z.B. anstelle des Korbes 22 Förderbänder, Schnecken, Pressen usw. verwenden, die zum Abtransportieren und Entwässern des Rechengutes dienen und an sich bekannt sind.

Bezeichnungsliste
1 = Einlaufkanal
2 = Gummiklappe
3 = Kunststoffband, mit Schlitzen versehen
3'= Segmente des Kunststoffbandes 3
4 = Schlitze im Kunststoffband 3
5 = untere Rolle
6 = Mitnehmer
7 = Kette
7'= Verbindungsteile
8 = Gleitführungen aus Kunststoff
9 = Seitenplatten
10 = Getriebemotor
11 = Kettenräder
12 = obere Rolle
12'= Welle der oberen Rolle 12
13 = erstes Umlenkkettenrad
14 = zweites Umlenkkettenrad
15 = Nocken
16 = dachförmiger Schutzteil
17 = Trichter
18 = Abstreifer
19 = Hebel
20 = Gegengewicht
21 = Mitnehmer 6 und Abstreifer 18 in einer anderen Lage
22 = Korb
23 = oberer Rand des Einlaufkanals 1
24 = Boden des Einlaufkanals 1
25 = tieferer Teil des Bodens des Einlaufkanals 1
26 = Wasser mit Sand bei normalem Wasserstand
27 = Rechengut
28 = Wasseroberfläche bei hohem Wasserstand
A  = flacher Teil des Rechens
B  = ansteigender Teil des Rechens

**Patentansprüche**

1. Vorrichtung zur Reinigung von Abwasser (26) mit wenigstens einem ein endloses Band enthaltenden Rechen (A, B) in einem Einlaufkanal (1), dadurch gekennzeichnet, dass der ein endloses Kunststoffband (3) enthaltende Rechen (A, B) mit seinem flachen Teil (A) in den Einlaufkanal (1) als eine Verlängerung des Bodens (24) des Einlaufkanals (1) in Richtung der Strömung des Abwassers (26) und mit seinem ansteigenden Teil (B) schräg aufwärts in Richtung der Strömung des Abwassers (26) hinter dem flachen Teil (A) aus dem Einlaufkanal (1) sich erstreckend eingesetzt ist.

2. Vorrichtung nach Anspruch 1, gekennzeichnet dadurch, dass das endlose Kunststoffband (3) mit Schlitzen (4) versehen ist.

3. Vorrichtung nach Anspruch 2, dadurch gekennzeichnet, dass das Kunststoffband (3) mit Mitnehmern (6) ausgerüstet ist.

4. Vorrichtung nach Anspruch 3, dadurch gekennzeichnet, dass das Kunststoffband (3) aus Segmenten (3') besteht, deren Endpartien nach aussen gebogen und aneinandermontiert sind und die Mitnehmer (6) für grobe Teile bilden.

5. Vorrichtung nach Anspruch 2, dadurch gekennzeichnet, dass die obere Rolle (12), um die das Kunststoffband (3) gelagert ist, Nocken (15) aufweist, deren Form und gegenseitige Lage der Form und der gegenseitigen Lage der Schlitze (4) des Kunststoffbandes (3) entsprechen.

6. Vorrichtung nach Anspruch 5, dadurch gekennzeichnet, dass die obere, mit den Nocken (15) versehene Rolle (12), an die obere Kettenräder (11) angeschlossen sind, deren Ketten (7) mit den Rändern des Kunststoffbandes (3) verbunden sind, an einen Getriebemotor (10) angekoppelt ist.

7. Vorrichtung nach Anspruch 2, dadurch gekennzeichnet, dass der Rechen (A, B) mit wenigstens einem Abstreifer (18) versehen ist, der das Kunststoffband (3) während des Umlaufes kontaktiert.

8. Vorrichtung nach Anspruch 7, dadurch gekennzeichnet, dass der Abstreifer (18) während des Umlaufes des Kunststoffbandes (3) auch die Mitnehmer (6) kontaktiert.

**Revendications**

1. Dispositif pour l'épuration d'eaux usées (26) équipé d'au moins une grille (A, B) contenant une bande sans fin et placée dans un canal d'entrée (1), caractérisé en ce que la grille (A, B) contenant une bande sand fin (3) en matière synthétique est placée dans le canal d'entrée (1) de façon que sa partie plane (A) s'étende dans le prolongement du fond (24) du canal d'entrée (1) dans le sens de l'écoulement des eaux usées (26) et que sa partie ascendante (B) s'étende obliquement vers le haut dans le sens de l'écoulement des eaux usées (26), à la suite de la partie plane (A), en dehors du canal d'entrée (1).

2. Dispositif selon la revendication 1, caractérisé en ce que la bande sans fin (3) en matière synthétique présente des fentes (4).

3. Dispositif selon la revendication 2, caractérisé en ce que la bande (3) en matière synthétique est munie de taquets (6).

4. Dispositif selon la revendication 3, caractérisé en ce que la bande (3) en matière synthétique est consitutée par des segments (3') dont les parties terminales sont repliées vers l'extérieur et montées les unes contre les autres de façon à former les taquets (6) pour de gros fragments.

5. Dispositif selon la revendication 2, caractérisé en ce que la poulie supérieure (12), autour de laquelle est montée la bande (3) en matière synthétique, présente des saillies (15) dont la forme et la position les unes par rapport aux autres correspondent à la forme et à la position des fentes (4) de la bande (3) en matière synthétique les unes par rapport aux autres.

6. Dispositif selon la revendication 5, caractérisé en ce que la poulie supérieure (12) munie des saillies (15) et à laquelle sont reliées les roues à chaîne supérieures (11), dont les chaînes (7) sont reliées aux bords de la bande (3) en matière synthétique, est accouplée à un motoréducteur (10).

7. Dispositif selon la revendication 2, caractérisé en ce que la grille (A, B) est munie d'au moins une racle (18) qui se trouve au contact de la bande (3) en matière synthétique au cours de la circulation de celle-ci.

8. Dispositif selon la revendication 7, caractérisé en ce que lors de la circulation de la bande (3) en matière synthétique la racle (18) entre également en contact avec les taquets (6).

**Claims**

1. An apparatus for cleaning sewage (26), having at least one rake (A, B) comprising a continuous belt of plastics material in an inlet duct (1), characterized in that the rake (A, B) comprising a continuous belt (3) of plastics material is inserted with its flat portion (A) in the inlet duct (1) as an extension of the base (24) of the inlet duct (1) in the direction of the flow of the sewage (26) and with its rising portion (B) extending obliquely upwards out of the inlet duct (1) in the direction of the flow of the sewage (26) behind the flat portion (A).

2. An apparatus according to claim 1, characterized in that the continuous belt (3) of plastics material is provided with slots (4).

3. An apparatus according to claim 2, characterized in that the belt (3) of plastics material is provided with entrainment means (6).

4. An apparatus according to claim 3, characterized in that the belt (3) of plastics material comprises segments (3'), the end portions of which are bent outwards and are attached one upon the other and form the entrainment means (6) for large articles.

5. An apparatus according to claim 2, characterized in that the upper roller (12), around which the belt (3) of plastics material is disposed, comprises cams (15), the shape and mutual position of which correspond to the shape and mutual position of the slots (4) of the belt (3) of plastics material.

6. An apparatus according to claim 5, characterized in that the upper roller (12), which is provided with the cams (15) and to which are attached the upper sprocket wheels (11) whose chains (7) are connected to the edges of the belt (3) of plastics material, is connected to a geared motor (10).

7. An apparatus according to claim 2, characterized in that the rake (A, B) is provided with at least one wiper (18) which is in contact with the belt (3) of plastics material during the circulation.

8. An apparatus according to claim 7, characterized in that wiper (18) ios also in contact with the entrainment means (6) during the circulation of the belt (3) of plastics material.

FIG.1

0108717

# FIG.2

# FIG. 3

# FIG. 4